# EUROPEAN PATENT SPECIFICATION

(11) **EP 0 847 704 B1**
(45) Date of publication and mention of the grant of the patent: **14.08.2002**
(21) Application number: 97309798.3
(22) Date of filing: 04.12.1997
(51) Int. Cl.: A23L 3/3517

(54) **Antimicrobial agents for foods**
Antimokrobielles Mittel für Nahrungsmittel
Agent antimicrobien pour des produits alimentaires

(30) Priority: 11.12.1996 JP 35190196
(43) Date of publication of application: 17.06.1998
(73) Proprietor: RIKEN VITAMIN CO., LTD., Chiyoda-ku, Tokyo (JP)
(72) Inventor: Nakanishi, Kohichi, Hirakata-City, Ogsaka-Prefecture (JP); Yoshida, Fumiko, Suita-City, Ohsaka-Prefecture (JP)
(74) Representative: Stuart, Ian Alexander

(56) References cited:
- WO-A-95/07616
- US-A- 4 002 775
- PATENT ABSTRACTS OF JAPAN vol. 016, no. 180 (C-0935), 30 April 1992 & JP 04 021608 A (NIPPON OIL & FATS CO LTD), 24 January 1992,

## Description

The present invention relates to antimicrobial agents for foods manifesting bacteriostatic effects against a wide range of microorganisms and having excellent safety.

With progress of product distributing systems, foods are available over wider areas. This is supported also by food preserving technique. Since foods directly relate to health keeping and disease prevention of humans, hygienically safe foods should be provided not to mention of prevention of degradation and deterioration of foods. Conventionally, to improve the preservation ability of foods, natural and synthetic various antimicrobial agents are used. Synthetic antimicrobial agents composed of sorbic acid and benzoic acid can be used only for limited foods, and problems regarding safety are pointed out. In natural antimicrobial agents, for example, lysozyme, protamine and various spice extracts, bacteriostatic effect is not satisfactory, there are problems regarding flavor of foods and cost performance, and it is substantially impossible to add them in large amount. Further, when an organic acid is used as an antimicrobial agent, the organic acid sometimes exerts an bad influence on physical properties of foods since it reduces pH of the foods. While, a monoglyceride of a lower fatty acid has fairly excellent bacteriostatic effect, however, a fatty acid monoglyceride having 10 or less carbon atoms has peculiar stimulant taste and a fatty acid monoglyceride having 12 or more carbon atoms is poor in solubility. Although, there are other preparations using various bacteriostatic agents, sufficient effects are not obtained yet, and some of them exert a bad influence on flavor and mouth-feel of foods.

JP 04 021608A discloses the use of a fatty acid glyceride as an antimicrobial agent, with a fatty acid polyglyceride as an emulsifier.

US-A-4 002 775 discloses antimicrobial compositions based on C₁₂ fatty acid monoesters of polyols. Simple trihydric polyols such as glycerol are preferred.

WO 95/07616 discloses food disinfectants based on glycerol monoesters.

Preferred embodiments of the present invention may provide an excellent antimicrobial agent for foods which manifests bacteriostatic effect against wide range of which manifests bacteriostatic effect against wide range of microorganisms, excellent in safety, and does not exert a bad influence on flavor, eat feeling, physical properties and the like of foods.

The antimicrobial agents for foods of the present invention have the following features:- the content of monoesters constituting a polyglycerin fatty ester is not less than 50% by weight (hereinafter merely called wt%). The polyglycerin portion constituting the polyglycerin fatty ester is composed of a di, tri, tetra or penta-glycerin. Preferably the fatty acid constituting the polyglycerin fatty ester is composed of one or a mixture of two or more of caprylic acid, capric acid, lauric acid and myristic acid.

The content of monoesters in a ester mixture of a polyglycerin fatty ester used in the antimicrobial agent for foods of the present invention is not less than 50 wt%, and more preferably, not less than 70 wt%. Since polyvalent esters such as a diester or higher valent ester and free polyglycerins have little bacteriostatic effect against a microorganism, a polyglycerin fatty ester having a content of monoesters of less than 50 wt% cannot be expected to have satisfactory bacteriostatic effect.

The fatty acid suitable for inclusion in the polyglycerin fatty ester used in the present invention includes saturated or unsaturated linear fatty acid having 8 to 14 carbon atoms such as caprylic acid, capric acid, lauric acid, myristic acid and the like, and is composed of one or a mixture of two or more of these fatty acids. When the number of carbon atoms of a saturated fatty acid is less than 8, its peculiar stimulant taste may exert a bad influence on flavor of a food, and when over 14, bacteriostatic effect may not be sufficient.

The polyglycerin fatty ester used in the present invention may be obtained as follows. A polyglycerin component composed of one or a mixture of two or more of di, tri, tetra or penta-glycerins is subjected to esterification reaction with a fatty acid to obtain a mixture, and the mixture is separated and purified by methods including, but not limited to, distillation, liquid-liquid extraction, and chromatography.

The usual amount of the polyglycerin fatty ester used in the present invention is from 0.01 to 2.0 wt%, and preferably from 0.03 to 0.5 wt%. When the amount added is less than 0.01 wt%, bacteriostatic effect may be insufficient, and when over 2.0 wt%, there is a possibility of a bad influence on flavor.

Further, the polyglycerin fatty ester used in the present invention can be used alone or in combination, and other general preservatives and bactericides can also be used together.

By using the polyglycerin fatty ester as described above, there can be obtained an antimicrobial agent for foods which does not exert a bad influence on taste and flavor of a food and is excellent in solubility, and consequently, food can be preserved safely at low cost.

The effects of the present invention will be exemplified with the following examples.

### Embodiment 1 (diglycerin fatty acid monoester)

Forty grams of CaO were added to 20kg of glycerin, and condensation reaction of glycerin was conducted at 260 °C for 3 hours, then, 72g of H₃PO₄ was added for neutralization, and the mixture was cooled. The obtained composition was composed of 59 wt% of glycerin, 23 wt% of diglycerin, 12 wt% of triglycerin, 5 wt% of tetraglycerin and 1 wt% of pentaglycerin. This composition was subjected to molecular distillation with gradually increasing distillation temperature for distilling off fractions in succession to obtain a fraction containing 95 wt% of diglycerin. This diglycerin was charged in a reaction vessel together with highly purified caprylic acid (purity 99%), lauric acid (purity 99%) or myristic acid (purity 99%) respectively in a ratio of 1:1 (by mol), esterification reactions were conducted at 260°C for 1 hour. The resulted reaction products were distilled off by molecular distillation to obtain the following diglycerin fatty monoesters.
Antimicrobial agent 1A: diglycerin monocaprylate (monoester content 76 wt%)
Antimicrobial agent 1B: diglycerin monolaurate (monoester content 83 wt%)
Antimicrobial agent 1C: diglycerin monomyristate (monoester content 84 wt%)

### Embodiment 2 (triglycerin fatty acid monoester)

The same glycerin condensation reaction was conducted as in Embodiment 1, and the resulted mixture was subjected to molecular distillation with gradually increasing distillation temperature for distilling off fractions in succession to obtain a fraction containing 90 wt% of triglycerin. This triglycerin was purified by activated charcoal treatment, then the same esterification reaction was conducted as in Embodiment 1 using highly purified capric acid (purity 99%), lauric acid or myristic acid. The resulted reaction products were extracted with hexane and 90% methanol, and the following triglycerin fatty monoesters were obtained from the extract of 90% methanol side.
Antimicrobial agent 2A: triglycerin monocaprate (monoester content 76 wt%)
Antimicrobial agent 2B: triglycerin monolaurate (monoester content 83 wt%)
Antimicrobial agent 2C: triglycerin monomyristate (monoester content 84 wt%)

### Embodiment 3 (tetraglycerin fatty acid monoester)

The same glycerin condensation reaction was conducted as in Embodiment 1, and the resulted mixture was subjected to molecular distillation with gradually increasing distillation temperature for distilling off fractions in succession, and from the finally remained residue, a fraction containing 70 wt% of tetraglycerin was obtained. This tetraglycerin was purified by activated charcoal treatment, then the same esterification reaction was conducted as in Embodiment 2 using highly purified caprylic acid or myristic acid, to obtain the following tetraglycerin fatty monoesters.
Antimicrobial agent 3A: tetraglycerin monocaprylate (monoester content 62 wt%)
Antimicrobial agent 3B: tetraglycerin monomyristate (monoester content 76 wt%)

### Embodiment 4 (pentaglycerin fatty acid monoester)

The same glycerin condensation reaction was conducted as in Embodiment 1, except that the reaction temperature was changed to 5 hours, to obtained a composition composed of 30 wt% of glycerin, 29 wt% of diglycerin, 25 wt% of triglycerin, 10 wt% of tetraglycerin, 5 wt% of pentaglycerin and 1 wt% of hexaglycerin. This composition was subjected to molecular distillation with gradually increasing distillation temperature for distilling off fractions in succession, and from the finally remained residue, a composition was obtained composed of 13 wt% of triglycerin, 63 wt% of tetraglycerin, 20 wt% of pentaglycerin and 4 wt% of hexaglycerin. This composition was purified by activated charcoal treatment, then the same esterification reaction was conducted as in Embodiment 2 using highly purified capric acid or lauric acid, and the resulted reaction products were repeatedly extracted by thin layer chromatography (developing solution: chloroform 45, methanol 5) to obtain the following pentaglycerin fatty monoesters.
Antimicrobial agent 4A: pentaglycerin monocaprate (monoester content 50 wt%)
Antimicrobial agent 4B: pentaglycerin monolaurate (monoester content 52 wt%)

### Comparative Example 1

The same esterification reaction and molecular distillation as in Embodiment 1 were conducted using diglycerin obtained in Embodiment 1 and highly purified palmitic acid (purity 96%) to obtain the following diglycerin fatty monoester.
Comparative compound 1a: diglycerin monopalmitate (monoester content 85 wt%)

### Comparative Example 2

The same esterification reaction as in Embodiment 1 was conducted using triglycerin obtained in Embodiment 2 and highly purified capric acid and myristic acid, the mixture was allowed to stand still to separate free polyols, then the following reaction products (comparative compounds) were obtained without extraction treatment
Comparative compound 2a: triglycerin caprate (monoester content 30 wt%)
Comparative compound 2b: triglycerin myristate (monoester content 32 wt%)

### Comparative Example 3

The same esterification reaction as in Embodiment 1 was conducted using tetraglycerin obtained in Embodiment 3 and highly purified lauric acid and myristic acid, the mixture was allowed to stand still to separate free polyols, then the following reaction products (comparative compounds) were obtained without extraction treatment
Comparative compound 3a: tetraglycerin laurate (monoester content 26 wt%)
Comparative compound 3b: tetraglycerin myristate (monoester content 25 wt%)

### Comparative Example 4

The same esterification reaction as in Embodiment 1 was conducted using two kinds of commercially available polyglycerins (tetraglycerin, decaglycerin) and highly purified lauric acid, the mixture was allowed to stand still to separate free polyols, then the following reaction products (comparative compounds) were obtained without extraction treatment
Comparative compound 4a: tetraglycerin laurate (monoester content: 26%)
Comparative compound 4b: decaglycerin laurate (monoester content: 25%)

### [Experiments]

### Experiment 1

A standard agar culture was used as a culture for bacteria, a potato dextrose culture was used as a culture for fungus and peptone • yeast extract • grapesugar culture as a culture for yeast, and the antimicrobial agents obtained in Embodiments 1 to 4 were added to the cultures in an amount of 10 ppm, 50 ppm, 100 ppm, 250 ppm, 500 ppm and 1000 ppm, respectively, for sterilization. Then, a bacterial culture solution which had been cultivated for 48 hours using normal bouillon was diluted to 1 × 104-fold volume with a physiological saline solution, and 0.1 ml of the bacterium suspended solution and 20 ml of the above-described sterilized culture were poured in a sterilized petri dish, and cooled for solidification. The solidified material was cultivated for 48 hours at 30 °C, then, the minimum amount of the antimicrobial agent required for blocking growth of the bacterium was determined. Here, two kinds of bacteria (Bacillus subtilis, Staphylococcus aureus), one kind of fungus (Byssochlamys nivea) and one kind of yeast (Saccharomyces cerevisiae) were used. The results are shown in Table 1.

### Experiment 2

For Clostridium pasteurianum, a modified TGC culture (thioglycolate culture manufactured by Nissui Seiyaku K.K.) was used and for Streptococcus thermophilus, a peptone • yeast extract • magnesium sulfate • grapesugar culture was used, and to them were added the antimicrobial agents obtained in Embodiments 1 to 4 in an amount of 10 ppm, 50 ppm, 100 ppm, 250 ppm, 500 ppm and 1000 ppm, respectively, for sterilization. Then, a bacterial culture solution which had been cultivated for 48 hours using normal bouillon was diluted to 1 × 104-fold volume with a physiological saline solution, and 0.1 ml of the bacterium suspended solution and 20 ml of the abovedescribed sterilized culture were poured in a previously sterilized test tube with a screw lid. The solution was cultivated for 48 hours at 37 °C, then, the minimum amount of the antimicrobial agent required for blocking growth of the bacterium was determined. The results are shown in Table 3.

### Comparative Experiment 1

The minimum amounts of the comparative compounds obtained in Comparative Examples 1 to 4 required for blocking growth of the bacterium were measured according to the procedure in Embodiment 1. The results are shown in Table 2.

### Comparative Experiment 2

The minimum amounts of the comparative compounds obtained in Comparative Examples 1 to 4 required for blocking growth of the bacterium were measured according to the procedure in Embodiment 2. The results are shown in Table 4.

The antimicrobial agent for foods of the present invention manifests excellent antimicrobial property by addition to foods since it shows bacteriostatic effect against wide range of microorganisms and is excellent in safety, therefore, the object as described above can be attained.

### Experiment 3

Custard cream was prepared from following materials, egg(32g), milk (288g), suggar( 76g), wheat flour ( 13g ) and coan starch (13g), and the antimicrobial agents ( 0.05wt% ) obtained in Embodiments I to 4. This custard cream was stocked under temperature 20 °C for preservation experiment. The results are shown in Table 5.

### Comparative Experiment 3

According to the procedure in Experiment 3, comparative custard cream was prepared, in this procedure comparative compounds ( 0.05wt% ) obtained in Comparative Examples 1 to 4 were used instead of the antimicrobial agents in Embodiments 1 to 4. This comparative custard cream was stocked under temperature 20°C for preservation experiment. The results are shown in Table 5.

### Experiment 4

Boiled fish-paste was prepared from following materials, chilled fish meat (5Kg), common salt ( 9g ), these materials were ground and kneaded for 30 minutes, monreover next materials were added, suggar ( 30g ), white potate starch ( 30g ), sodium glutamate ( 18g ), sweet sort of sake ( 30g ) and the antimicrobial agents ( 0.05wt% ) obtained in Embodiments 1 to 4. And these full materials were again ground and kneaded for 10 minutes, and filled into tubes for casing, finally heated up at 85 °C for 30 minutes. After cooling down, the boiled fish-pate was stocked under temperature 30°C for experiment of preservation. The results are shown in Table 6.

### Comparative Experiment 4

According to the procedure in Experiment 4, comparative boiled fish-paste was prepared, in this procedure comparative compounds ( 0.05wt% ) obtained in Comparative Examples 1 to 4 were used instead of the antimicrobial agents in Embodiments 1 to 4. And this comparative boiled fish-paste was stocked under temperature 30°C for preservation experiment. The results are shown in Table 6.

### Experiment 5

Sausages were prepared from following materials, minced meat ( 660g ), iced water ( 240g ), wheat flour ( 50g ), spices ( 4g ), common salt ( 21g ), condiments or seasonings ( 11g ), sodium nitrite ( 0.05g ), sodium ascorbic acid ( 0.02g ) and eatable red pigment ( 0.02g ). These materials were mixed, smashed, and the antimicrobial agents ( 0.3wt% ) obtained in Embodiments 1 to 4 were added. The materials with the antimicrobial agents were filled into tubes for casing, and heated for disinfection at 80 °C for 50 minutes. After cooling down, the sausages were stocked under temperature 25 °C for preservation experiment. The results are shown in Table 7.

### Comparative Experiment 5

According to the procedure in Experiment 5, comparative sausages were prepared, in this procedure comparative compouds ( 0.3wt% ) obtained in Comparative Examples 1 to 4 were used instead of the antimicrobial agents in Embodiments 1 to 4. And this comparative sausages were stocked under temperature 30°C for preservation experiment. The results are shown in Table 7.

**Table 1**

| Minimum concentration for blocking growth (unit:ppm) | | | | |
|---|---|---|---|---|
| Antimicrobial agents | Bacterium | | | |
| | Bacterium 1 | Bacterium 2 | Bacterium 3 | Bacterium 4 |
| 1A | 50 | 50 | 250 | 100 |
| 1B | 10 | 50 | 100 | 100 |
| 1C | 10 | 10 | 100 | 10 |
| 2A | 50 | 50 | 250 | 50 |
| 2B | 10 | 50 | 250 | 10 |
| 2C | 10 | 10 | 250 | 10 |
| 3A | 50 | 50 | 250 | 100 |
| 3B | 10 | 10 | 250 | 10 |
| 4A | 100 | 50 | 250 | 50 |
| 4B | 50 | 50 | 250 | 50 |
| ( Note ) Bacterium 1 = Bacillus subtilis Bacterium 2 = Stapylococcus aureus Bacterium 3 = Byssochlamys nivea Bacterium 4 = Saccharomyces cerevisiae | | | | |

**Table 2**

| Minimum concentration for blocking growth (unit:ppm) | | | | |
|---|---|---|---|---|
| Comparative compounds | Bacterium | | | |
| | Bacterium 1 | Bacterium 2 | Bacterium 3 | Bacterium 4 |
| 1a | >1000 | >1000 | >1000 | >1000 |
| 2a | >1000 | >1000 | >1000 | >1000 |
| 2b | >1000 | >1000 | >1000 | >1000 |
| 3a | >1000 | >1000 | >1000 | >1000 |
| 3b | >1000 | >1000 | >1000 | >1000 |
| 4a | >1000 | >1000 | >1000 | >1000 |
| 4b | >1000 | >1000 | >1000 | >1000 |
| ( Note) Bacteria 1 to 4 are described in Note of Table 1. | | | | |

**Table 3**

| Minimum concentration for blocking growth ( unit: ppm ) | | |
|---|---|---|
| Antimicrobial agents | Bacterium | |
| | Bacterium 5 | Bacterium 6 |
| 1A | 50 | 10 |
| 1B | 50 | 10 |
| 1C | 10 | 10 |
| 2A | 50 | 50 |
| 2B | 10 | 50 |
| 2C | 10 | 10 |
| 3A | 50 | 50 |
| 3B | 10 | 10 |
| 4A | 50 | 10 |
| 4B | 100 | 50 |
| ( Note ) Bacterium 5 = Clostridium pasteurianum Bacterium 6 = Streptococcus thermophilus | | |

**Table 4**

| Minimum concentration for blocking growth ( unit: ppm ) | | |
|---|---|---|
| Comparative compounds | Bacterium | |
| | Bacterium 5 | Bacterium 6 |
| 1a | >1000 | >1000 |
| 2a | >1000 | >1000 |
| 2b | >1000 | >1000 |
| | | |
| 3a | >1000 | >1000 |
| 3b | >1000 | >1000 |
| 4a | >1000 | >1000 |
| 4b | >1000 | >1000 |
| ( Note) Bacterium 5 = Clostridium pasteurianum Bacterium 6 = Streptococcus thermophilus | | |

**Table 5**

| Antimicrobial agents and comparative compounds | Preservation experiment ( 20°C ) | | | | | | |
|---|---|---|---|---|---|---|---|
| | 1 day | 2 days | 3 days | 4 days | 5 days | 6 days | 7 days |
| Antimicrobial agents | | | | | | | |
| 1B | - | - | - | - | - | ± | + |
| 1C | - | - | - | - | - | ± | + |
| 2C | - | - | - | - | - | ± | + |
| 3B | - | - | - | - | - | ± | + |
| 4B | - | - | - | - | - | ± | + |

| Comparative compounds | | | | | | | |
|---|---|---|---|---|---|---|---|
| 1a | - | - | ± | + | ++ | ++ | +++ |
| 2a | - | - | - | ± | ++ | ++ | +++ |
| 3a | - | - | - | ± | + | ++ | +++ |
| 4a | - | - | - | ± | + | ++ | +++ |
| ( Note ) Symbol " - " shows changeless. Symbol " ± " shows faint smell of rotting. Symbols " + ", " + + " and " +++ " show progressively greater progress of rot. | | | | | | | |

**Table 6**

| Antimicrobial agents and comparative compounds | Preservation experiment ( 30°C ) | | | | | | |
|---|---|---|---|---|---|---|---|
| | 1 day | 2 days | 3 days | 4 days | 5 days | 6 days | 7 days |
| Antimicrobial agents | | | | | | | |
| 1B | - | - | - | - | - | ± | + |
| 1C | - | - | - | - | - | ± | + |
| 2C | - | - | - | - | - | ± | + |
| 3B | - | - | - | - | - | ± | + |
| 4B | - | - | - | - | ± | ± | + |

| Comparative compounds | | | | | | | |
|---|---|---|---|---|---|---|---|
| 1a | - | - | ± | + | ++ | ++ | +++ |
| 2b | - | - | ± | + | ++ | ++ | +++ |
| 3a | - | - | - | ± | + | + | ++ |
| 4a | - | - | - | ± | + | + | ++ |
| ( Note ) Symbol " - " shows changeless. Symbol " ± " shows faint smell of rotting. Symbols " + ", " ++ " and " +++ " show progressively greater progress of rot. | | | | | | | |

**Table 7**

| Antimicrobial agents and comparative compounds | Prevervation experiment ( 25°C ) | | | | | |
|---|---|---|---|---|---|---|
| | 1 day | 3 days | 5 days | 7 days | 9 days | |
| Antimicrobial agents | | | | | | |
| 1B | - | - | - | - | + | |
| 1C | - | - | - | - | + | |
| 2C | - | - | - | - | + | |
| 3B | - | - | - | - | + | |
| 4B | - | - | - | ± | + | |

| Comparative compounds | | | | | | |
|---|---|---|---|---|---|---|
| 1a | - | ± | + | ++ | +++ | |
| 2a | - | ± | + | ++ | +++ | |
| 3b | - | ± | + | ++ | +++ | |
| 4b | - | ± | + | ++ | +++ | |
| ( Note ) Symbol " - " shows changeless. Symbol " ± " shows faint smell of rotting. Symbols " + ", " + + " and "+++" show progressively greater progress of rot. | | | | | | |

## Claims

1. An antimicrobial agent for foods, comprising a polyglycerin fatty acid ester composition whereof the polyglycerin portion is composed of a di, tri, tetra or penta-glycerin; and wherein the content of monoesters is not less than 50 wt%.

2. The antimicrobial agent for foods according to claim 1, wherein the fatty acid of the polyglycerin fatty acid ester composition is composed of one or a mixture of two or more saturated or unsaturated linear fatty acids having 8-14 carbon atoms.

3. The antimicrobial agent of claim 2 wherein the fatty acid is one or more of caprylic acid, capric acid, lauric acid and myristic acid.

4. An antimicrobial agent according to any preceding claim wherein said content of monoesters is not less than 70 wt%.

5. Use as an antimicrobial agent for foods of a polyglycerin fatty acid ester composition wherein the content of monoesters is not less than 50 wt% and wherein the polyglycerin portion of the polyglycerin fatty acid ester composition is composed of a di, tri, tetra or penta-glycerin.

6. Use according to claim 5 wherein the fatty acid of the polyglycerin fatty acid ester composition is composed of one or a mixture of two or more saturated or unsaturated linear fatty acids having 8-14 carbon atoms.

7. Use according to claim 6 wherein the fatty acid is one or more of caprylic acid, capric acid, lauric acid and myristic acid.

8. A use according to any of claims 5-7 wherein said content of monoesters is not less than 70 wt%.

9. A method of foodstuff preservation comprising adding to a foodstuff an antimicrobial agent as defined in any of claims 1 to 4.

## Patentansprüche

1. Antimikrobielles Mittel für Nahrungsmittel, umfassend eine Polyglycerinfettsäureester-Zusammensetzung, deren Polyglycerinabschnitt aus einem Di-, Tri-, Tetra- oder Pentaglycerin besteht; und worin der Gehalt an Monoestern nicht unter 50 Gew.-% liegt.

2. Antimikrobielles Mittel für Nahrungsmittel nach Anspruch 1, worin die Fettsäure der Polyglycerinfettsäureester-Zusammensetzung aus einer oder einem Gemisch von zwei oder mehr gesättigten oder ungesättigten, linearen Fettsäure(n) mit 8 bis 14 Kohlenstoffatomen besteht.

3. Antimikrobielles Mittel nach Anspruch 2, worin die Fettsäure eine oder mehrere von n-Caprylsäure, n-Caprinsäure, Laurinsäure und Myristinsäure ist.

4. Antimikrobielles Mittel nach einem der vorangegangenen Ansprüche, worin der Gehalt an Monoestern nicht unter 70 Gew.-% liegt.

5. Verwendung einer Polyglycerinfettsäureester-Zusammensetzung, worin der Gehalt an Monoestern nicht unter 50 Gew.-% liegt und worin der Polyglycerinabschnitt der Polyglycerinfettsäureester-Zusammensetzung aus einem Di-, Tri-, Tetra- oder Pentaglycerin besteht, als antimikrobielles Mittel für Nahrungsmittel.

6. Verwendung nach Anspruch 5, worin die Fettsäure der Polyglycerinfettsäureester-Zusammensetzung aus einer oder einem Gemisch von zwei oder mehr gesättigten oder ungesättigten, linearen Fettsäure(n) mit 8 bis 14 Kohlenstoffatomen besteht.

7. Verwendung nach Anspruch 6, worin die Fettsäure eine oder mehrere von n-Caprylsäure, n-Caprinsäure, Laurinsäure und Myristinsäure ist.

8. Verwendung nach einem der Ansprüche 5 bis 7, worin der Gehalt an Monoestern nicht unter 70 Gew.-% liegt.

9. Verfahren zur Nahrungsmittelkonservierung, umfassend den Zusatz eines antimikrobiellen Mittels nach einem der Ansprüche 1 bis 4 zu einem Nahrungsmittel.

## Revendications

1. Agent antimicrobien pour aliments, comprenant une composition d'ester d'acide gras de polyglycérine dont la portion de polyglycérine se compose d'une di, tri, tétra ou penta-glycérine ; et où la teneur en monoesters n'est pas inférieure à 50% en poids.

2. Agent antimocribien pour aliments selon la revendication 1, où l'acide gras de la composition d'ester d'acide gras de polyglycérine se compose d'un ou d'un mélange de deux acides gras linéaires saturés ou insaturés ou plus ayant 8-14 atomes de carbone.

3. Agent antimocrobien de la revendication 2 où l'acide gras est un ou plusieurs d'acide caprylique, acide caprique, acide laurique et acide myristique.

4. Agent antimicrobien selon toute revendication précédente où ladite teneur en monoesters n'est pas inférieure à 70% en poids.

5. Utilisation comme agent antimicrobien pour aliments d'une composition d'ester d'acide gras de polyglycérine où la teneur en monoesters n'est pas inférieure à 50% en poids et où la portion de polyglycérine de la composition d'ester d'acide gras de polyglycérine se compose d'une di, tri, tétra ou penta-glycérine.

6. Utilisation selon la revendication 5 où l'acide gras de la composition d'ester d'acide gras de polyglycérine se compose d'un ou d'un mélange de deux acides gras linéaires saturés ou insaturés ou plus ayant 8-14 atomes de carbone.

7. Utilisation selon la revendication 6 où l'acide gras est un plusieurs d'acide caprylique, acide caprique, acide laurique et acide mystirique.

8. Utilisation selon l'une des revendications 5-7 où ladite teneur des monoesters n'est pas inférieure à 70% en poids.

9. Méthode de préservation des aliments consistant à ajouter à un aliment un agent antimicrobien tel que défini selon l'une quelconque des revendications 1 à 4.
